# EUROPÄISCHE PATENTANMELDUNG

(11) **EP 2 034 176 A2**
(43) Veröffentlichungstag der Anmeldung: **11.03.2009**
(21) Anmeldenummer: 08021176.6
(22) Anmeldetag: 30.11.2005
(51) Int. Cl.: F03B 1/00, F03B 11/02

(54) **Peltonturbine mit einem Wasserabfuhrsystem**

(30) Priorität: 17.12.2004 DE 202004019537 U
(62) Teilanmeldung aus: 05813550.0
(71) Anmelder: Erlach Consult Jec, 88213 Ravensburg (DE)
(72) Erfinder: Erlach, Josef, 88213 Ravensburg (DE)
(74) Vertreter: Manitz, Finsterwald & Partner GbR

(57) **Zusammenfassung**

Die Erfindung handelt von einer Peltonturbine mit einem Wasserabfuhrsystem für Leistungen von mehr als 100 kW, wobei innerhalb eines Gehäuses ein Laufrad mit Doppelbechern einer Becherbreite und einer Becherlänge bestückt ist, in welche Düsen, die in einer Symmetrie-Ebene der umlaufenden Becher angeordnet sind, tangential auf einem Freistrahldurchmesser jeweils einen Freistrahl einspritzen. Aus den Bechern austretendes Spritzwasser fällt eingeschlossen durch Gehäusewände in einen Unterwasserkanal. Führungsmittel, die innerhalb des Gehäuses an den Bechern ansetzen, sind über den vollständigen Umfang des Laufrades angeordnet, wobei sie Spritzwasser führen und umlenken, oder mindestens ein Bremsgitter ist auf einer kreisringförmigen Durchtrittsfläche mit mindestens einem dem Freistrahldurchmesser entsprechenden mittleren Ringdurchmesser und einer mindestens der Becherlänge entsprechenden Ringbreite parallel zum Laufrad angeordnet, um die Schaumbildung von Spritzwasser zu unterdrücken und vom Laufrad fern zu halten.

## Beschreibung

Die Erfindung betrifft eine Peltonturbine mit einem Wasserabfuhrsystem für Leistungen von mehr als 100 kW, wobei innerhalb eines Gehäuses ein Laufrad mit Doppelbechern einer Breite "b" und einer Becherlänge "l" bestückt ist, in welche Düsen, die in einer Symmetrieebene der umlaufenden Becher angeordnet sind, tangential auf einem Freistrahldurchmesser "D1" jeweils an einem Tangentenpunkt (29) einen Freistrahl einspritzen und wobei aus den Bechern austretendes Spritzwasser eingeschlossen durch Gehäusewände in einen Unterwasserkanal fällt.

Bei einer Peltonturbine wird das gesamte Nutzgefälle in der Düse in Geschwindigkeitsenergie umgesetzt. Die Schaufeln der Doppelbecher sind so geformt, dass der Freistrahl von einer Mittelschneide in gleiche Teile geschnitten und im Becher um nahezu 180° umgelenkt wird. Durch die Umlenkung wird fast die gesamte kinetische Energie des Wasserstrahles in Impulskraft am Radumfang umgesetzt. Die verbleibende Restenergie von etwa 2 bis 4 % ist noch als Geschwindigkeitsenergie vorhanden, um die Becher gut und schnell zu entleeren und geht größtenteils in etwa Achsrichtung aufgefächert beiderseits des Laufrades in das Turbinengehäuse bzw. auf die freie Oberfläche des Unterwasserkanals.

Die eine Peltonturbine der eingangs angegebenen Art beschreibende Patentschrift US 1,448,893 offenbart Doppelbecher, welche fertigungstechnisch den Vorteil haben, dass sie wegen der nach Außen fehlenden radialen Seitenwand einfach herstellbar sind. Gleichzeitig entsteht aber der Nachteil, dass mit dem Fehlen dieser äußeren Seitenwand an den Bechern in diesem Bereich keine Kräfte durch Umlenken von Strömung an das Laufrad abgegeben werden. Aus diesem Grund wird am Gehäuse eine teilweise oder vollständig umlaufende und an den Bechern angrenzende zylindrische Rückhalte-Wand angebracht, welche das sonst radial nach Außen laufende Wasser zurückstaut und zum Abfluss über die Seitenwände in axialer Richtung zwingt.

Die Patentschrift US 4,950,130 zeigt eine Peltonturbine, bei der die Ventilationsverluste des Laufrades, d.h. im Wesentlichen die Becher dazu benutzt werden, um Luft von außerhalb des Gehäuses anzusaugen und in einen Raum über einem geschlossenen Sumpf zu fördern. Durch den erhöhten Druck über dem Sumpf kann das Wasser aus dem Sumpf über eine Rohrleitung in Bassins, deren Wasserspiegel geodätisch höher liegt, gefördert werden. Um diese Wirkung zu erreichen, ist der Raum über dem Sumpf durch eine Begrenzungswand von einem Ventilationsraum getrennt. Die Begrenzungswand ist in umlaufender Richtung gesehen vor dem Einlass für Frischluft angeordnet und ist dort möglichst nah an die Kontur von Becher und Laufrad herangeführt, um möglichst wenig Luft aus dem Raum zurück in den Ventilationsraum zu verlieren.

In Patent Abstracts of Japan Bd. 16, Nr. 480 (M-1321) und JP 04175468 A werden im Zusammenhang mit einer Peltonturbine vor den Bechern radial gegen Außen angeordnete Leitbleche gezeigt sowie über einen begrenzten Umfang eine zylindrische Abdeckung zu der Peripherie der Becher.

In Patent Abstracts of Japan Bd. 1998, Nr. 11 und JP 10176648 A wird zum Zwecke der Verringerung der Schallausbreitung im Sumpf einer Peltonturbine vorgesehen, einen Wasservorhang am offenen Wasserabfluss des Sumpfs auszubilden. Über dem Sumpf ist ein wannenartiger Lochblechboden gezeigt, in welchem ein Teil des Spritzwassers gesammelt wird, um damit den Wasservorhang am Ausfluss des Sumpfs zu speisen.

Die Patentschrift AT 366476 zeigt, dass das Gehäuse einer Peltonturbine einstückig ausgeführt werden kann, wenn das Laufrad längs seiner Symmetrieebene durch eine Deckelöffnung abgesenkt wird und auf einer quer dazu durch die Lager eingeschobene Welle festgesetzt wird. Der dazugehörige Deckel ist als Kasten ausgebaut, welcher über einen Teil des Radumfanges die Becher mit einem zylindrischen Führungsblech und mit Seitenwangen gegen Spritzwasser aus dem restlichen Gehäuseraum abdeckt.

Die Patentschrift CH 100772 zeigt eine vertikale Anordnung einer Peltonturbine, bei der obere und untere Ablenkbleche, die auf Höhe der Becherwurzeln ansetzen, seitlich aus den Doppelbechern austretende Spritzwasserströme in Raumbereiche ablenken, welche einen größeren Durchmesser als im Vergleich dazu der Laufraddurchmesser aufweisen. Zur besseren Führung des unteren Spritzwasserstromes ist in einem größeren Abstand unterhalb des Laufrades ein weiteres Leitblech in Form eines umlaufenden Schildes angebracht, welches beim Einfangen des unteren Spritzwasserstromes behilflich ist. Durch auftretende Variationen der Austrittsrichtungen der Spritzwasserströme entstehen unterschiedliche räumliche Reflexionen, die sich kreuzen und im ganzen Gehäuse verteilen können, wodurch große Schleppverluste am Laufrad entstehen.

Bei Turbinen mit vertikaler Laufradachse (1-6 düsig) wird das nach oben austretende Wasser an der Decke zur Gehäuseaußenwand umgelenkt und nach oben abgeführt. Das aus der unteren Becherhälfte austretende

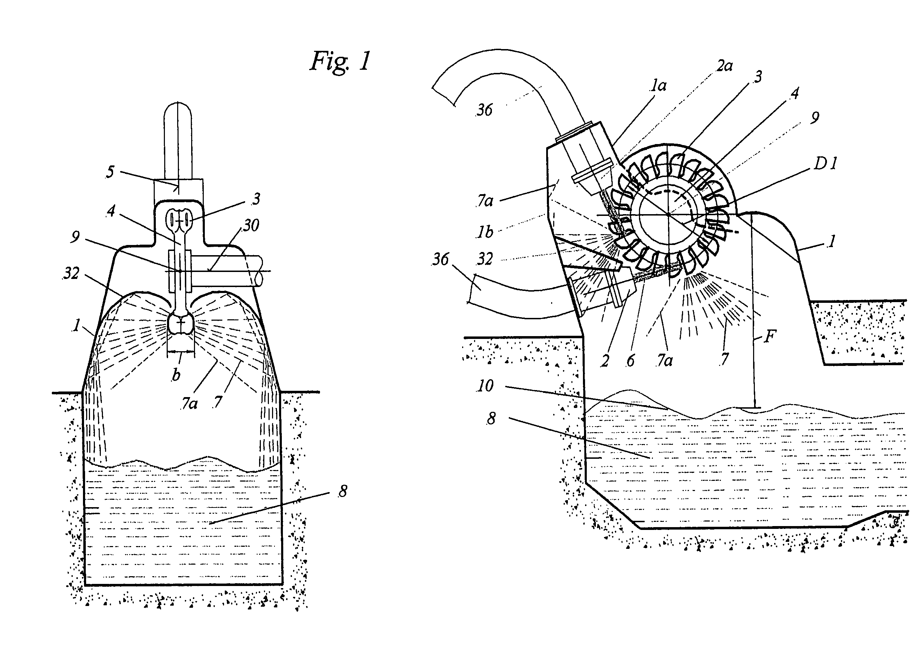

Wasser trifft meist schräg die Außenwand bzw. direkt auf den freien Wasserspiegel auf. Das noch mit relativ hoher Geschwindigkeit aus den zwei Becherhälften austretende Wasser reisst noch sehr viel Luft, zwischen 30 und 70 % der Wassermenge, mit und verwirbelt im starken Masse die Oberfläche des Unterwasserkanals. Um das Laufrad sicher vor den Auswirkungen der Schaumbildung zu schützen liegt es mit seinem Laufradmittelpunkt um den Freihang "F" d.h. etwa dem Zweifachen vom Freistrahldurchmesser "D1" höher als der Pegel des Unterwasserkanals, was einen Fallhöhen- bzw. Energieverlust bedeutet (siehe Figur 1, Prior Art).

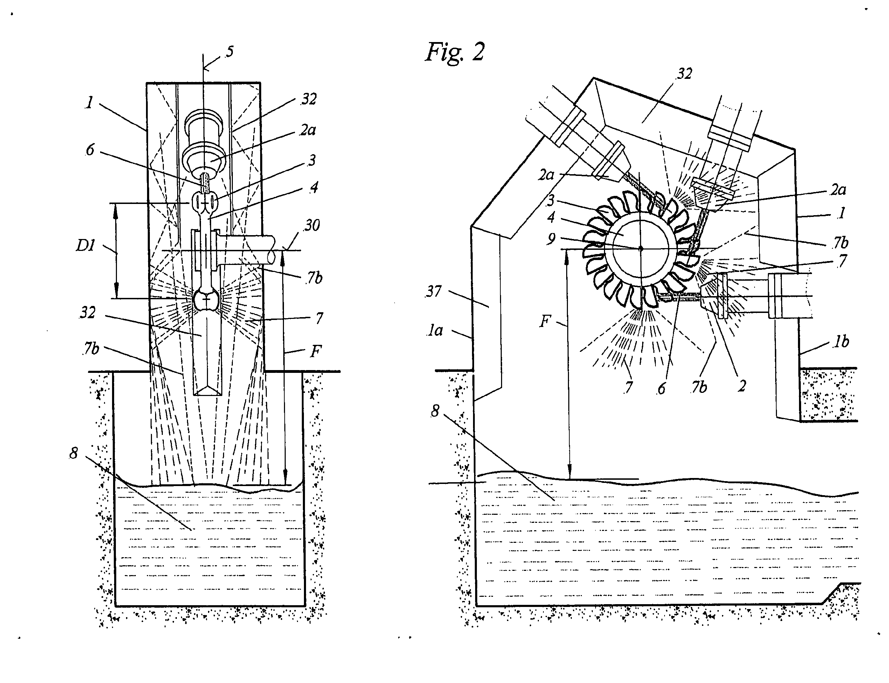

Bei Turbinen mit horizontaler Laufradachse (1-3 düsig) wird das Wasser seitlich , in Achsrichtung, an das Gehäuse gespritzt und über geeignete Umlenkungen nach unten abgeführt. Die Anzahl der Düsen ist wegen der schlechten Wasserabführung oben liegender Düsen aus dem Gehäuse auf (1) bis 2, maximal 3 begrenzt. Der Freihang "F" ist ähnlich wie bei der vertikalen Turbine dimensioniert. Bei höherer Düsenzahl ist die Entwässerung problematisch und nur noch mit Einbussen am Wirkungsgrad bzw. Leistung, vor allem im Vollastbereich möglich, weil das Austrittswasser nach oben abgelenkt wird, ohne dass es aus dem Bereich des Laufrades entfernt ist (siehe Figur 2, Prior Art).

Die grosse Schaumbildung hat nicht nur zur Folge, dass der Freihang entsprechend gross gewählt werden muss, sondern auch dass dieser Schaum über lange Beruhigungsstrecken abgebaut werden muss, wenn das Wasser weiter verwendet wird.
Letzteres ist bei Pelton- Gegendruckturbinen der Fall, wenn sie im Stand by Betrieb im "hydraulischen Kurzschluss" mit einer Pumpe am gleichen Wellenstrang laufen, um bei Bedarf in wenigen Sekunden eine verlangte Last an einen Generator abzugeben. Solche Anforderungen treten beispielsweise bei Pumpspeicheranlagen mit Peltonturbinen im Gegendruckbetrieb auf. Hohe Lastregelschwankungen treten dort mit starken Wasserstrom- und Druckschwankungen auf, welche das Laufrad mit Schwall- und Schaumbildung beeinträchtigen können. Um Pelton-Gegendruckturbinen bei stark schwankendem Unterwasserpegel sicher betreiben zu können, müssen diese durch Druckluft auf einer Kote frei geblasen werden, die einen sicheren schaumfreien Betrieb ermöglicht. In der Turbinenkammer wirkt dann ein Druck, der der jeweiligen Unterwasserkote des zugehörigen Unterwasserbeckens entspricht. Die über das Laufrad in das Unterwasser eingetragene Luft wird unterschieden in einen gelösten Anteil, der sich durch Entspannung aus dem Druckunterschied vor und nach der Düse ergibt, und in einen ungelösten Anteil, der vom Spritzwasser mitgerissen wird. Die Länge der Ausperlstrecke im Unterwasserkanal ist abhängig von der Eintragtiefe unter dem Laufrad sowie der gleichmäßigen Strömungsverteilung nach dem Laufrad. Damit sich das Niveau im Unterwasserkanal nicht verändert, muss der fehlende Luftanteil über Kompressoren ersetzt werden.

Jede Verlängerung eines Unterwasserkanals, der fast immer in einer Kaverne liegt, verteuert die Baukosten, wenn sie nur dem Ausgasen von Luft dient. Ein weiterer Punkt ist der, dass die Garantiegrenze für die entsprechend den IEC 60041- Richtlinien garantierten Leistungswerte bei dem Turbinenhersteller mit der Höhe vom Laufradmittelpunkt aufhört, während ein bestimmter Freihang, der ausserhalb dieser Garantiegrenze definiert ist, dem Betreiber vorgegeben wird, der bauseitig dafür zu sorgen hat, dass die Wasserabfuhr funktioniert. Aus diesem Grund hat sich ein Standard für den Freihang "F" eingebürgert, der bei dem Zweifachen des Freistrahldurchmessers "D1" liegt und der beim Betrieb der Anlagen wegen Schaumbildung auch voll ausgenutzt wird.

Aufgabe der Erfindung ist es, die Entwässerung der Turbine auch bei geringeren Düsenzahlen, insbesondere bei zwei bis vier Düsen so zu verbessern, dass der Freihang um einen wesentlichen Betrag verkleinert werden kann, dass also Fallhöhe durch einen tiefer liegenden Einbau des Laufradmittelpunktes gewonnen wird.

Gemäß der Erfindung wird dies im Wesentlichen dadurch erreicht, dass innerhalb des Gehäuses an den Bechern ansetzend über den vollständigen Umfang des Laufrades (4) als Führungsmittel, das Spritzwasser führt und umlenkt, ein innerer Gehäusering vorgesehen ist, der bis an die Wurzeln der Becher (3) herangeführt ist, und dass jeder Freistrahl in Richtung des Tangentenpunkts durch einen Durchbruch in einem ebenfalls das Spritzwasser führenden und umlenkenden, dachförmigen äußeren Führungsmittel geführt ist, wobei die Spitze des dachförmigen Führungsmittels in der Symmetrieebene der Führungsmittel gelegen ist und einen Abstand "S1" von 5% bis 20% der Becherlänge "1" zu den Bechern aufweist und die Dachflächen zur Symmetrieebene einen Winkel α zwischen 55° und 80° bilden.

Der Erfindung liegt die Erkenntnis zu Grunde, dass der "Luftbedarf" der Turbine stark von der Weglänge und der Ausbreitungsmöglichkeit der Spritzwasserpartikel bis zum Austreffen auf die Oberfläche des Unterwasserkanals abhängig ist. Das heißt, bei eng geführtem beziehungsweise eng gebündeltem Spritzwasser wird die Angriffsfläche zur Luftanreicherung entsprechend reduziert. Dies darf aber nicht soweit führen, dass bei Normalbetrieb Spritzwasser zum Laufrad zurückgestaut wird.

Des weiteren liegt die Erkenntnis zu Grunde, dass das Laufrad und der Laufradbereich möglichst frei von vagabundierenden Spritzern und Wassernebel sein sollte, um die Ventilationsverluste niedrig zu halten.

Die Erfindung hat den Vorteil, dass die Installationshöhe "F" für das Laufrad auf weniger als das 1,5- fache des Freistrahldurchmessers festgelegt werden kann. Bei einer ursprünglichen Fallhöhe von 200m und einem Laufrad mit Freistrahldurchmesser von einem Meter entspricht dies einer Verbesserung um etwa 0,5 m der Fallhöhe d.h. 0,25%. Dadurch dass mit dem Verlassen der Becher eine gezielte Abfuhr des Spritzwassers erfolgt, die von anderen vagabundierenden Spritzwasserteilen abgeschirmt ist, können letztere sich weder an einer Vergrösserung der Schaumbildung noch an einem Bremsen am Laufrad beteiligen, wobei die Schaumbildung auch durch Bremsgitter, die parallel zum Laufrad angeordnet sind wesentlich reduziert wird. Wenn man bedenkt, dass die Turbinenhersteller im Augenblick für eine Wirkungsgradverbesserung von 0,1% eine Entwicklungszeit von einem Jahr annehmen, dann sind die hier aufgezeigten Vorteile offensichtlich.

Durch die Erfindung ist es möglich vertikale und horizontale Peltonturbinen mit hoher Energiedichte entsprechend der Anzahl der Düsen, das heisst mit einem Laufrad gleicher Grösse ohne Leistungs-Einbussen wegen Spritzwassers bis zu 6-düsig auszuführen.

Die Erfindung verbessert ebenfalls ein gutes Abführen des Spritzwassers bei wenig Luftbedarf und verhindert gleichzeitig Störungen der mitumlaufenden Ventilationsluft, da keine hineinragenden Düsen sich störend auswirken können.

Die abhängigen Ansprüche 2 bis 8 stellen vorteilhafte Weiterbildungen des Gegenstandes der Erfindung dar.

Ein innerhalb des Gehäuses vorgesehener äußerer Gehäusering, der in der Symmetrie-Ebene in einem Abstand "S1" von 5% bis 20% einer Becherlänge "l" zu den Bechern angeordnet ist, erbringt wesentliche Vorteile, da er das direkt aus den Bechern austretende Spritzwasser vor reflektiertem vagabundierenden Spritzwasser schützt. Ein weiterer Vorteil liegt darin, dass bei einer dickeren Gestaltung dieses äusseren Gehäuseringes im Bereich der Symmetrie-Ebene die Freistrahlen in tangential zu dem Freistrahldurchmesser "D1" geführten Durchbrüchen ebenfalls vor vagabundierendem Spritzwasser geschützt sind. Wenn diese Verdickung in der Symmetrie-Ebene als Spitze eines dachförmig zum Laufrad vorstehenden Vorsprungs ausgeführt ist, kann gleichzeitig eine der Austrittsrichtung entsprechende seitliche Begrenzung für das Spritzwasser geschaffen werden. Solange die Düsen über den dachförmigen Vorsprung nach innen hineinragen, können sie selbst mit ihrem Düsenkörper nicht an der Erzeugung von vagabundierendem Spritzwasser beteiligt sein, während der äussere Gehäusering dafür sorgt, dass sich das aussen an ihm vorbei bewegende Spritzwasser nicht mit dem Spritzwasser auf seiner Innenseite vermischen kann. Je geringer die Durchbrüche im äusseren Gehäusering von dem Durchmesser eines Freistrahls abweichen, desto kleiner ist auf der Innenseite die von der Dachform abweichende Angriffsfläche für das Dispergieren von Spritzwasser. Wenn die Düsenkörper vollständig gegen den äusseren Gehäusering abgedichtet sind, kann keine Luft eingesogen werden, was beim Betrieb mit Luft-Überdruck im Gehäuse eine Rolle spielen kann. Solche Systeme existieren bei den oben erwähnten Anlagen zum Abfangen von Spitzenlasten, bei denen Turbine und Pumpe im hydraulischen Kurzschluss gefahren werden. Dort bilden Turbinengehäuse und Unterwasserkanal eine geschlossene Atmosphäre mit Überdruck, in welche von Kompressoren Luft eingeblasen wird, um die vom Spritzwasser mitgenommenen Luftanteile zu ersetzen. Wenn hier das Schäumen, d.h. der Lufteintrag vermindert wird, kann die Kompressorleistung kleiner dimensioniert werden.

Ein beiderseits vom Laufrad umlaufender innerer Gehäusering, der bis an die Wurzeln der Becher herangeführt ist, verbessert zusätzlich die Führung des aus den Bechern austretenden Spritzwassers. Es entsteht ein ringförmiger sich senkrecht von der Symmetrie-Ebene weg konisch öffnender Kanal, wobei die halben Öffnungswinkel α und β zwischen 55° und 80° gewählt sind, um die Ablaufrichtung des Spritzwassers aus den Bechern zu berücksichtigen. Ein Optimum für die Winkel α und β liegt zwischen 65° und 75°. Wenn das Spitzwasser in einem schleifend einfangenden Ringraum kanalisiert ist, kann dieser durch ein zylindrisches Anschlussstück fortgesetzt werden und sich später sogar verjüngen. Bautechnisch ist es sinnvoll, das zylindrische Anschlussstück auf einen Abstand von dem 1,4- bis dem 2-fachen der Becherbreite "b" von der Symmetrie-Ebene weg fortzusetzen.

Im zylindrischen Anschlussstück selbst oder daran anschliessend kann ein Bremsgitter vorgesehen sein, das auf einer Durchtrittsfläche mit einem mittleren Durchmesser entsprechend dem Freistrahldurchmesser "D1" und einer Ringbreite entsprechend mindestens einer Becherlänge "l" parallel zum Laufrad angeordnet ist, um Spritzwasser möglichst schaumfrei abzubremsen.

Ein Gitter entwickelt generell eine Schaum unterdrückende Wirkung und kann auch in bestehende Anlagen eingebaut werden. Zum Beispiel kann bei vertikaler Laufradachse unterhalb des Laufrades quer durch das Gehäuse über dessen ganzen Querschnitt ein Gitter angeordnet sein, um die Schaumbildung zu verringern.

Das Bremsgitter weist mindestens zwei Lagen von in einer Ebene parallel zu der Symmetrie-Ebene in einem Abstand zum Laufrad angeordneten Balken auf, die pro Lage in gleichem Abstand zueinander angeordnet sind. Dabei beträgt in einer Lage der Durchmesser der Balken 60% bis 70% des Mittenabstandes zweier benachbarter Balken. Die nächstfolgende Lage von gleich ausgerichteten Balken kann um einen halben Mittenabstand zu der davor liegenden Lage versetzt sein. Die Balken selbst haben einen runden Querschnitt und sind vorzugsweise als Rohre ausgeführt. Diese können beispielsweise zur Dämpfung mit Sand oder Split gefüllt werden, wenn sie durch die intermittierende Beaufschlagung mit Spritzwasser zu Schwingungen angeregt werden sollten. Um beispielsweise eine gute mechanische Stabilität eines Bremsgitters zu erreichen kann man drei Lagen von Rohren in Sandwichbauweise mit kurzen um 80 bis 90° versetzten Abstandshaltern verbinden.

Es hat sich als vorteilhaft erwiesen eine Anordnung zu wählen, bei der Sektoren von 3-lagigen Gittern wie Tortenstücke zu einem Kreisring zusammengesetzt sind. Die Lage der Balken oder Rohre ist dabei annähernd radial angeordnet. Die runde Form der Balken hat zunächst den Vorteil, dass ihre Wirkung wenig richtungsabhängig ist, wenn die Spritzwasserplatscher mit grosser Geschwindigkeit auftreffen. Eine weitere Wirkung besteht darin dass diese Spritzwasserplatscher in sich verformt werden, wenn sie auf der runden Oberfläche auftreffen. Bei einem versetzten Auftreffen auf der gekrümmten Oberfläche setzt eine Längung und Abbremsung der Spritzwasserplatscher ein, die an der darauf folgenden Lage fortgesetzt wird.

Um die Wirkung unterschiedlicher Austrittswinkel des Wassers aus den Bechern zu den Bremsgittern herabzumindern und um eine kurze Verweilzeit im Ringraum zu den Bremsgittern sicher zu stellen, haben Modellversuche gezeigt, dass Leitbleche mit einem Anstellwinkel ϕ von 25 bis 35° in einem Abstand S3 von 1/10 bis 1/20 der Becherbreite b an die Becher herangeführt eine weitere Verbesserung der Wasserabfuhr durch das Bremsgitter ergeben. In Bezug auf die dem Becher zugewandte Schneide des Leitblechs sollte diese im Ringraum von einer senkrecht zum Freistrahl angeordneten Radialen in Umlaufrichtung um einen Winkel λ von 25 bis 40° versetzt sein. Unterschiedliche Austrittswinkel entstehen beispielsweise bei stark variierender Fallhöhe. Anders ausgedrückt: mit derartigen Leitblechen kann mit der gleichen Anordnung eine ähnlich gute Wirkung der Bremsgitter für verschiedene Fallhöhen erreicht werden.

Bei einer horizontal angebrachten Laufradachse lässt sich beiderseitig vom Laufrad ein Bremsgitter anbringen, an welches ein Fallschacht zum Unterwasserkanal anschliesst, was in Kombination mit einem äusseren Gehäusering besonders wirkungsvoll ist, wenn die Bremsgitter an den Ring anschliessen. Bei einem fliegend gelagerten Laufrad kann die Welle in dem Fallschacht durch Schutzbleche ummantelt werden um dort nicht auch noch dem Spritzwasser ausgesetzt zu sein.

Ferner kann bei einer horizontal angeordneten Laufradachse, speziell im Hinblick auf eine Anlage mit mehr als drei gleichmässig am Umfang verteilten Düsen, ein beidseitig angebrachter Ringraum mit äusserem und inneren Gehäusering so durch Leitbleche zwischen innerem und äusserem Gehäusering ergänzt werden, dass dort keine rotierende Strömung in umlaufender Richtung entsteht, sondern das Spritzwasser gezielt in einen Sammelkanal umgelenkt wird. Dadurch dass die profilierten Leitbleche in umlaufender Richtung vor dem Strahleintritt einer nachfolgenden Düse angebracht sind, wird eine Kreuzung mit Spritzwasser der nachfolgenden Kammer vermieden. Um unabhängig vom Betriebszustand Wasserspritzer in vor- und rücklaufender Richtung ableiten zu können sind je Düsenanordnung zwei bis drei in umlaufender Richtung hintereinander gestaffelte Leitbleche unterschiedlicher Länge angebracht, wobei der Abstand "S2" des ersten Leitbleches zu den Bechern zwischen 10% bis 30% der Becherbreite "b" beträgt und ein Austrittswinkel γ von 35 bis 45° zu einer Senkrechten zur Laufragachse besteht. Die Leitbleche enden beiderseits des Laufrades in Umlaufrichtung der Becher gekrümmt als gleich gerichtete Führungen in einem umlaufenden Sammelkanal, von denen mindestens der Sammelkanal auf der Wellenseite spiralförmig ausgeführt ist, um alles Spritzwasser dieser Seite dank seiner restlichen kinetischen Energie über einen Punkt "P" oberhalb der Laufradachse zu führen und so Fallhöhe einzusparen, da nach dem Punkt "P" ein geringes Gefälle zum Unterwasserkanal ausreichend ist. Wenn beide Seiten mit einem derartigen Sammelkanal versehen sind, liegt das Laufrad mehr als hälftig in einem Trog, der über einen höchsten, über dem Wasserspiegel liegenden Punkt mit dem Unterwasserkanal verbunden ist und der bei einem Start der Anlage beispielsweise mit einer Strahlpumpe leer geschöpft wird. Bei Anlagen im Dauerbetrieb, die vielleicht nur wenige Unterbrüche pro Jahr haben. ist dies eine vertretbare Betriebsart, bei der die Vorteile von einer mehr als dreidüsigen Anordnung für eine horizontale Wellenanordnung überwiegen.

Bei einer weiteren Lösung für vertikal angeordneten Peltonturbinen wird das Spritzwasser, welches die eine Becherhälfte nach oben verlässt, über Leitbleche umgelenkt und jeweils tangential weg in einen oberen Sammelkanal abgeführt. Das Spritzwasser aus der unteren Becherhälfte, das nach unten abströmt, wird pro Düse über Leitbleche und tangential weg in einen nach oben abgewinkelten Sammelkanal nach oben gefördert. Die oberen und unteren Sammelkanäle münden über einen Überlauf in einen spiralförmigen Zulauf für den gemeinsamen Unterwasserkanal, wobei der Austritt des oberen Spritzwassers auf einer höheren Kote erfolgt. Dadurch, dass das obere Spritzwasser einen nur kurzen reibungsbehafteten Weg hat, kann es höher fördern. Das untere Spritzwasser wird ebenfalls auf möglichst kurzem Weg nach oben gefördert.

Der Fallhöhengewinn ist hierbei von der Restgeschwindigkeit und diese wiederum von der Nettofallhöhe und von der Becherauslastung abhängig. Die verbleibende Energie am Becheraustritt beträgt zwischen 2 und 4% der Gesamtenergie. Bei einem Ausnützungsfaktor von 0,3 für diese Restenergie kann das Spritzwasser um 0,6 bis 1,2% der Fallhöhe auf einen Punkt "P" über dem Laufradmittelpunkt gefördert werden und mit geringem Gefälle in den Unterwasserkanal fliessen. Da als Fallhöhengewinn ebenso der Freihang dazu gerechnet wird ist für dieses Beispiel mit einem Gewinn an Gesamtenergie von 0,8 bis 1,4% zu rechnen.

Nachfolgend wird die Erfindung anhand von Ausführungsbeispielen beschrieben. Es zeigen
- Fig. 1:: aus dem Stand der Technik schematisch eine Peltonturbine mit horizontaler Wellenanordnung und mit zwei Düsen,
- Fig. 2:: aus dem Stand der Technik schematisch eine Peltonturbine mit horizontaler Wellenanordnung und mit drei Düsen,
- Fig. 3:: schematisch eine erfindungsgemässe Anordnung für eine Peltonturbine mit horizontaler Welle und mit drei Düsen in einer Seitenansicht,
- Fig. 4:: schematisch die Anordnung von Figur 3 in einer Frontalansicht,
- Fig. 5:: schematisch einen vergrösserten Ausschnitt aus Figur 3 mit einem Sektor von einem Bremsgitter,
- Fig. 6:: schematisch eine Ansicht auf den Sektor des Bremsgitters in Figur 5,
- Fig. 7:: schematisch einen vergrösserten Schnitt durch ein Bremsgitter nach Figur 6, welches aus drei Lagen von Rohren in Sandwichbauweise besteht,
- Fig. 8:: schematisch einen Ausschnitt einer Peltonturbine mit horizontaler Wellenanordnung und mit einem mit Leitblechen bestückten Ringraum für Spritzwasser,
- Fig. 9:: schematisch einen Ausschnitt von Leitblechen in Figur 8 mit ihrer Anordnung zum Laufrad,
- Fig. 10:: schematisch einen Schnitt von Figur 8 mit Blick auf die Leitbleche,
- Fig. 11:: schematisch einen vertikalen Schnitt von einer Peltonturbine in vertikaler Anordnung mit fünf Düsen und mit einem negativen Freihang F,
- Fig. 12:: schematisch einen horizontalen Schnitt durch die Turbine von Figur 11,
- Fig. 13:: schematisch einen vergrösserten Ausschnitt eines Umlenkbogens mit Schlitzen aus Figur 12,
- Fig. 14:: schematisch einen vertikalen und
- Fig. 15:: einen horizontalen Schnitt von einer Peltonturbine in vertikaler Anordnung mit sechs Düsen und mit nur einem Bremsgitter,
- Fig. 16:: schematisch eine Anordnung gemäß Fig. 5, bei der ein Leitblech mit einer radial verlaufenden Schneide dargestellt ist, und
- Fig. 17:: schematisch eine Seitenansicht von Fig. 16.

In den nachfolgenden Beispielen sind funktional gleiche Teile mit gleichen Hinweiszeichen versehen.

### Beispiele zum Stand der Technik

In Figur 1 ist eine Peltonturbine horizontal mit ihrer Laufradachse (30) gelagert und wird durch die Düsen (2) und (2a) an ihren Doppelbechern (3) der Becherbreite "b" an einem Freistrahl-Durchmesser "D1" jeweils mit einem Freistrahl (6) angespritzt. Das Laufrad (4) ist durch ein Gehäuse (1) , welches gegen unten zu einem Unterwasserkanal (8) offen ist, abgedeckt. Der Laufradmittelpunkt (9) liegt auf einer Installationshöhe "F" über dem Wasserspiegel (10) des Unterwasserkanals (8).

Der Freistrahl einer Düse trifft auf die Schneiden einer Symmetrie-Ebene (5) auf die Schneiden der vorbeilaufenden Doppelbecher (3) und wird entgegen der Umlaufrichtung umgelenkt, wobei er beim Verlassen der Becher als Spritzwasser (7) fächerförmig und intermittierend an das Gehäuse (1) und an die Ablenkbleche (32) auftrifft. Dabei wird das Spritzwasser (7) der Düse (2) am besten in den Unterwasserkanal (8) abgeleitet. Das Spritzwasser der Düse (2a) trifft teilweise aus ein Leitblech (32) das dachförmig über die nächste Düse (2) in Drehrichtung angebracht ist um den Freistrahl (6) vor den vagabundierenden Spritzwasseranteilen (7a) zu schützen. Zu bemerken dazu ist, dass sich die Hauptrichtung des Spritzwassers (7) entsprechend einer Fallhöhenänderung ebenfalls verschiebt.

Die Restenergie des Spritzwassers ist dabei noch so gross, dass es sich im ganzen Gehäuse (1, 1a, 1b) unter Schaumbildung verteilt. Erfahrungsgemäss muss die Installationshöhe "F" dem Zweifachen des Freistrahldurchmessers "D1" entsprechen, damit das Laufrad (4) nicht durch rückgestautes Spritzwasser (7) und Schaum zusätzlich gebremst wird. Die beiden Zuleitungen (36), welche als Verzweigung aus einer gemeinsamen Druckleitung entstehen, könnte man um eine weitere Zuleitung (36) ergänzen um so zu einer Anordnung gemäss Figur 2 zu kommen. Aber schon hier wird ersichtlich, dass Spritzwasser einer entgegen der Umlaufrichtung der Becher angebrachten zusätzlichen Düse einen wesentlichen längeren Weg mit sich kreuzenden und reflektierten Spritzwasserströmen durchläuft und so eine grössere Bremswirkung am Laufrad verursacht als die Düsen in einer ein- oder zweidüsigen Anordnung. Der Gesamtwirkungsgrad ist daher geringfügig schlechter als bei der Anordnung nach Figur 1 und würde sich wesentlich verschlechtern, wenn man eine weitere Düse entgegen der Umlaufrichtung der Becher anbringen würde.

### Beispiele gemäss der Erfindung

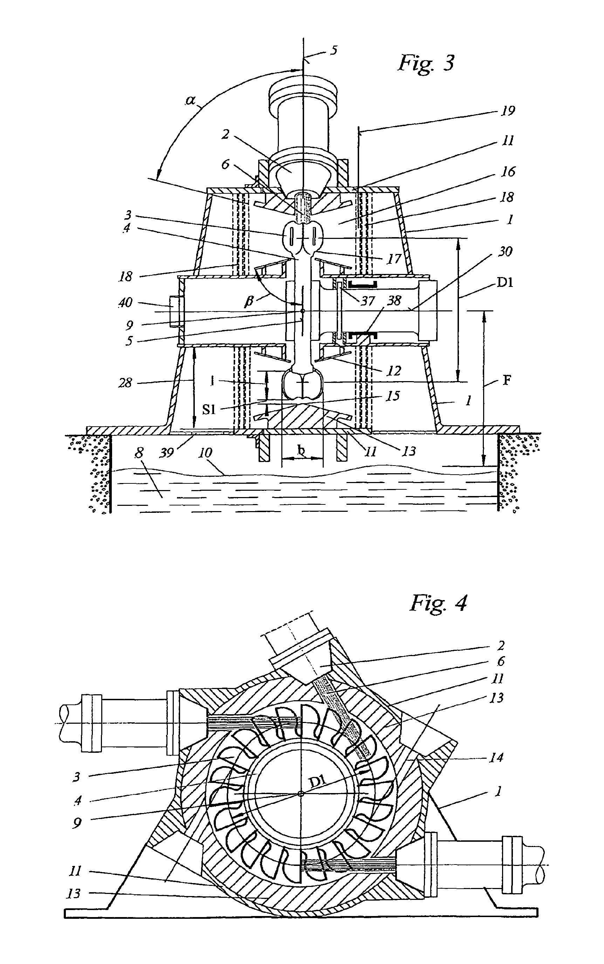

In den Figuren 3 und 4 ist ein Ausführungsbeispiel einer Peltonturbine mit drei von fünf möglichen Düsen (2) und mit einer horizontal angeordneten Laufradachse (30), welche in Lagern (38) gelagert ist, gezeigt. Innerhalb des Gehäuses (1) besteht ein äusserer Gehäusering (11), welcher das Laufrad (4) vollständig umschliesst. Ein innerer Gehäusering (12) setzt beidseitig vom Laufrad jeweils im Bereich der Wurzeln (17) der Becher an und bildet mit dem äusseren Gehäusering (11) einen radial sich konisch öffnenden Ringraum (16). In der Symmetrie-Ebene (5) des Laufrades wird ein aus den Düsen austretender Freistrahl (6) an den Schneiden der Doppelbecher jeweils geteilt und nach seiner Umlenkung und Impulsabgabe an die Becher in einen Ringraum (16) unter unterschiedlichen Austrittswinkeln abgegeben. Die gezeigte Anordnung mit drei Düsen (2) hat den Vorteil, dass die Düsen von aussen zugänglich sind.

Der äussere Gehäusering (11) bildet einen nach innen vorstehenden dachförmigen Vorsprung (13), dessen Spitze (15) in der Symmetrie-Ebene (5) liegt und in einem geringen Abstand "S1" von 5 bis 20% einer Becherlänge "1" zu den Bechern (3) angeordnet ist, um mit dem Laufrad umlaufendes und auszentrifugiertes Spritzwasser möglichst frühzeitig in den Ringraum (16) abzuleiten. In der Symmetrie-Ebene (5) liegen jeweils Durchbrüche (14) für den Freistrahl (6) im äusseren Gehäusering (11). Durch den geringen Abstand der Spitze (15) zu den Bechern 3 bleibt der Freistrahl (6) auf seinem Weg zu den Bechern von Spritzwasser unbehelligt. Die Düsen (2) sind zum äusseren Gehäusering (11) abgedichtet, damit möglichst wenig Luft mit dem Freistrahl eingezogen wird. Der Freistrahl ist im Durchbruch (14) relativ eng, aber berührungsfrei umschlossen, damit in der nach innen vorstehenden Dachform durch den Unterbruch möglichst geringe Angriffsflächen für umlaufende Spritzwasserpartikel entstehen.

Die Kanalisierung des aus den Bechern (3) austretenden Spritzwassers (7) verhindert gleichzeitig, dass vagabundierendes Spritzwasser in Laufradnähe eingemischt wird. Die Dachform des äusseren Gehäuserings (11) bildet mit der Symmetrie-Ebene (5) einen Winkel α von 75°. Ebenso bildet jeweils der innere Gehäusering (12) mit der Symmetrie-Ebene (5) einen Winkel β von 75°. Der sich öffnende Ringraum (16) wird durch ein zylindrisches Anschlussstück im äusseren Gehäusering (11) und durch ein zylindrisches Gehäuse für ein Lager (38) fortgesetzt. In diesem zylindrischen Teil des Ringraums (16) ist ein Bremsgitter (18) eingebaut, welches über den Umfang aus mehreren Segmenten zusammengesetzt ist. Das Gitterteil (18) eines Segments besteht aus drei Lagen von versetzt hintereinander liegenden Rohren.

Das im Ringraum (16) kanalisierte Spritzwasser, welches intermittierend auf dem Bremsgitter auftrifft, hat immer noch eine recht grosse Geschwindigkeit und Restenergie, die im Bremsgitter (18) durch Verzerren, Verformen und Ineinanderlaufen von Spritzwasserströmen verringert werden. Nach dem Austritt aus dem Bremsgitter wird das Spritzwasser vom Gehäuse (1) abgefangen und fällt unter Schwerkraft durch ein Lochblech (39) in den Unterwasserkanal (8). Es gibt daher keine Spritzwasserplatscher mehr, die wie Projektile in den Unterwasserkanal schiessen und Luft zur Schaumbildung nach sich ziehen. Dies erlaubt es den Laufradmittelpunkt (9) in einer Höhe "F" über dem Wasserspiegel (10) anzubringen, die nur noch dem Freistrahldurchmesser "D1" entspricht.

Das zylindrische Gehäuse für das Lager (38) ist auf der anderen Laufradseite fortgesetzt und mit einer Öffnung (40) für Belüftung. Das Lager (38) ist durch eine berührungslose Labyrinthdichtung (37) zum Laufrad gegen Spritzwasser abgedeckt, insbesondere zum Schutz bei instationären Betriebszuständen. Die Segmente des Bremsgitters (18) bilden einen Kreisring, mit einer Durchtrittsfläche (28), wobei eine erste Lage der Rohre in einer Ebene (19) parallel zur Symmetrie-Ebene (5) des Laufrades liegt. Dabei ist die Ebene (19) um etwas mehr als eine Becherbreite "b" von der Symmetrie-Ebene entfernt.

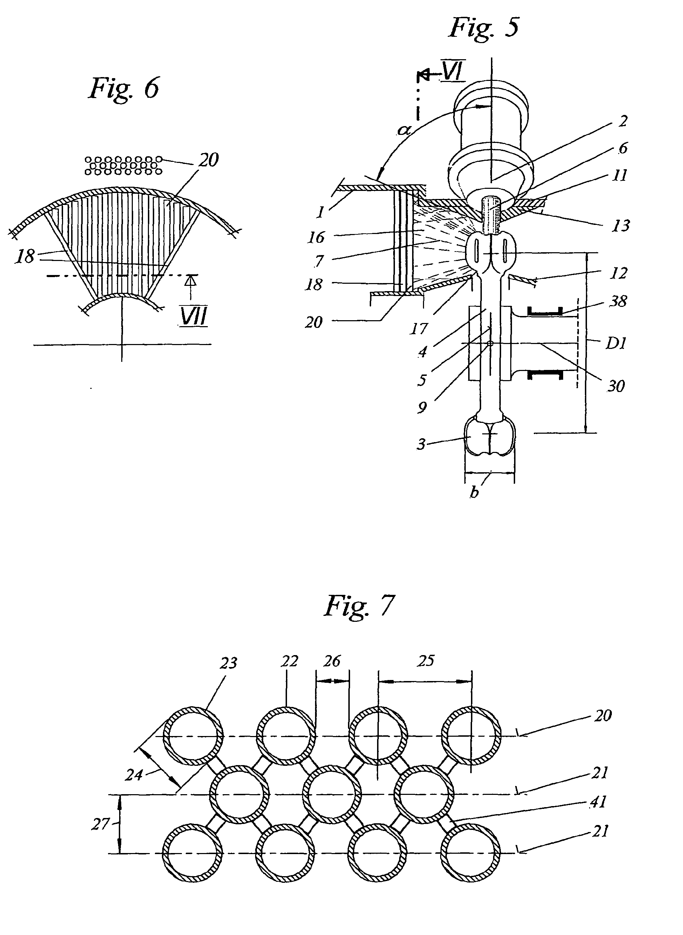

In den Figuren 5, 6 und 7 wird mehr auf ein Bremsgitter eingegangen. Das Spritzwasser (7) im Ringraum (16) trifft auf eine erste Lage (20) von parallelen Rohren (23) mit Rohrdurchmesser (24) und mit einem Zwischenraum (26) , der kleiner als der Rohrdurchmesser selbst ist. Die erste Lage (20) und jede weitere Lage (21) sind in Sandwichkonstruktion durch Klötzchen (41) miteinander verbunden. Die Rohre einer weiteren Lage sind jeweils um einen halben Mittenabstand (25) zu den Rohren der davor liegenden Lage versetzt. Die Rohre eines Segmentes (18) Fig. 6 sind so angeordnet, dass die mittleren Rohre radial verlaufen. Eine Anordnung gemäss Figur 7 kann beispielsweise die folgenden Dimensionen aufweisen:
- Rohre (23) mit einem Durchmesser (24) von 100 mm
- Einen Mittenabstand (25) von 150 mm
- Einen Abstand der Lagen (20, 21) von 100 mm, und
- Eine Länge der Klötzchen (41) von etwa 25 mm.

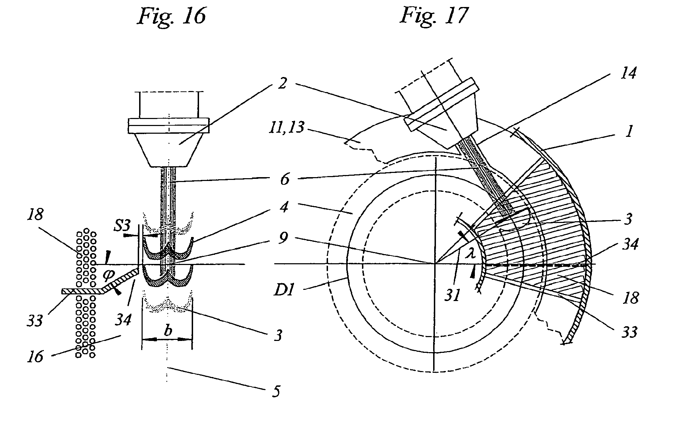

In den Figuren 16 und 17 ist eine Ergänzung zur Figur 5 dargestellt, in welcher zusätzlich Leitbleche 33 entsprechend der Anzahl Freistrahlen 6 im Ringraum 16 angebracht sind, um Spritzwasser, welches in Umlaufrichtung der Becher 3 austritt, zu kanalisieren. Damit wird verhindert, dass die Bremsgitter 18 wegen ungünstigem Anspritzwinkel einen Rückstau erzeugen. Die Leitbleche 33 haben radial verlaufende Schneidkanten 34 in einem Abstand S3 zu den Bechern von einem Zehntel bis zu einem Zwanzigstel der Becherbreite b. Sie stehen in einem Anstellwinkel ϕ von 25 bis 35° von der axialen Richtung zu den Bechern 3 hin. Bezogen auf eine senkrecht zum Freistrahl 6 angeordneten Radiale 31 sind die Schneidkanten 343 in Umlaufrichtung des Laufrades um einen Winkel λ von 25-40° versetzt. Die Leitbleche reichen bis nahe an die Bremsgitter heran oder sind abgeknickt durch die Bremsgitter hindurchgeführt. Konstruktiv ist es ein Kosten sparender Vorteil die Trennwände zwischen einzelnen Sektoren der Bremsgitter so in Umlaufrichtung festzulegen, dass sie als abgeknickte Fortsetzung des Leitblechs gestaltet sind.

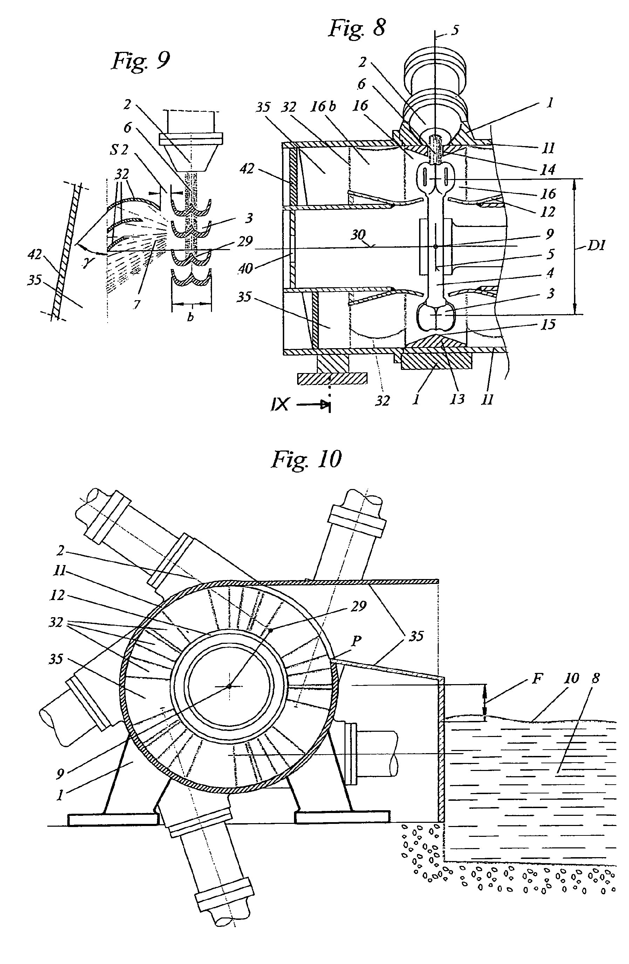

In den Figuren 8, 9 und 10 ist eine Peltonturbine in horizontale Wellenanordnung mit fünf Düsen (2) am Umfang versehen. Ein sich konisch öffnender Ringraum (16) setzt sich mit einem Anschlussstück (16b) im äusseren Gehäusering (11) zylindrisch und im inneren Gehäusering (12) mit einer Krümmung zum äusseren Gehäusering hin fort. In dem so gebildeten sich verengenden Kanal sind Leitbleche (32) angebracht, die jeweils als Dreiergruppe in Umlaufrichtung hintereinander einer Düse (2) zugeordnet sind. Dabei liegen die Leitbleche in Umlaufrichtung jeweils vor dem Tangentenpunkt (29) der zugehörigen Düse an den Freistrahldurchmesser "D1". Die Eintrittskante des in Umlaufrichtung ersten Leitblechs (32) besitzt einen kürzesten Abstand "S2" zu den Bechern, während die nachfolgenden Leitbleche (32) mit ihren Eintrittskanten jeweils weiter nach aussen versetzt sind und die Austrittskanten in einem gleichen Abstand zum Laufrad in einen Sammelkanal (35) einmünden. Der Austrittswinkel γ aus den Leitblechen zu einer Senkrechten zur Laufradachse beträgt 45°. Die Aussenwand des Sammelkanals (35) vergrössert sich stirnseitig in umlaufender Richtung der Becher in Form einer Wendel (42), welche über einen höchsten Punkt "P", der höher als der Laufradmittelpunkt (9) liegt, einen Überlauf in den Unterwasserkanal (8) hat. Diese durch die geführte Umlenkung erhaltene Restenergie wird zur Überwindung des höchsten Punktes "P" benötigt. Die Leitbleche (32) weisen eine leichte Krümmung entgegengesetzt zu der Krümmung der Becherhälften auf. Der Abstand "S2" der Eintrittskante des vorderen Leitblechs zu den Bechern entspricht 20 bis 30% der Becherbreite "b". Da die kinetische Energie des Spritzwassers durch eine straffe Strömungsführung ausgenutzt wird, ergibt sich eine kompakte Bauform, bei der die Düsen von aussen erreichbar sind, und ergibt sich ein Freihang "F", der nur ein Bruchteil des Freistrahldurchmessers "D1" ausmacht.

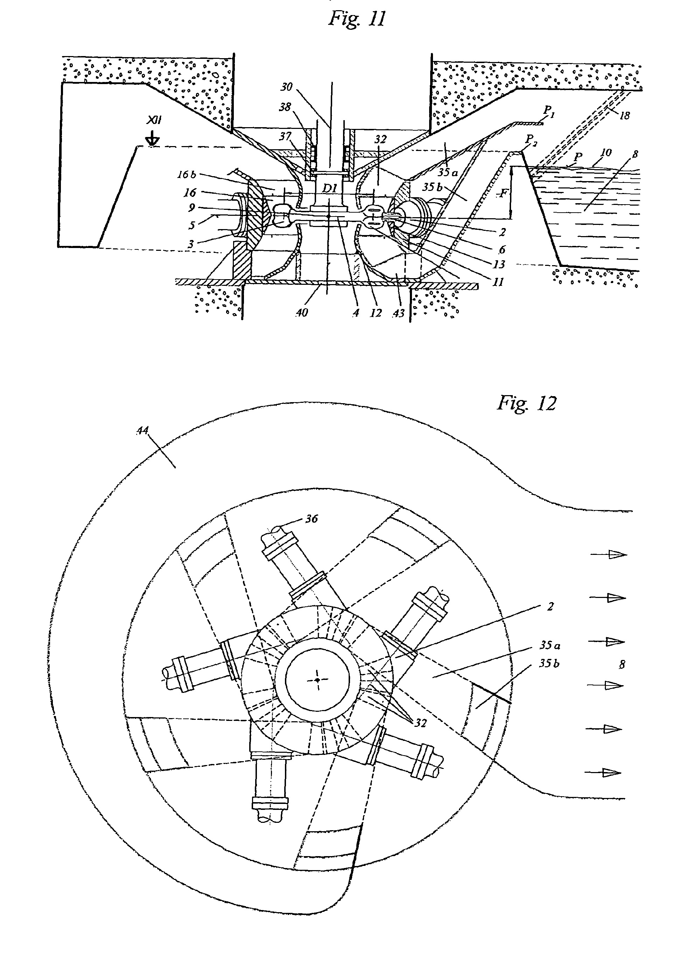

Im Beispiel der Figuren 11 und 12 mit einer fünfdüsigen vertikalen Aufstellung einer Peltonturbine wird der Ringraum (16) ebenfalls in einem Anschlussstück (16b) zu jeder Düse mit drei Leitblechen (32) versehen, die wie in Figur 9 bezüglich ihrer Eintrittskanten zu den Bechern gestaffelt angeordnet sind. Hingegen besitzt die Austrittsrichtung eine zusätzliche radiale Komponente gegen aussen. Die aus den drei Leitblechen austretende Strömung wird jeweils auf einen separaten tangential abgehenden Sammelkanal (35a, 35b) geführt, wobei der untere Sammelkanal einen zusätzlichen Umlenkbogen (43) aufweist. Der obere und der untere Sammelkanal (35a, 35b) liegen übereinander und führen tangential schräg nach oben weg und über einen Überlauf mit höchstem Punkt P1, P2 in einen spiralförmig sich erweiternden Zulauf (44) des Unterwasserkanals 8. Wenn dieser spiralförmige Zulauf (44) genügend breit und tief ausgeführt ist, können die Verteilleitungen (36) zu den Düsen (2) die Spirale kreuzen ohne den Wasserablauf zu behindern.

In Figur 11 ist am Übergang von der Spirale in den Unterwasserkanal (8) oberhalb des Wasserspiegels (10) ein Bremsgitter (18) strichliert angedeutet, welches die Strömung am Austritt der vordersten Sammelkanäle (35a, 35b) brechen soll. Der Freihang "F" ist negativ, da sich der Laufradmittelpunkt (9) unterhalb des Wasserspiegels (10) des Unterwasserkanals (8) befindet. Entsprechend gross ist der Gewinn an Fallhöhe, welcher der Summe vom negativen Abstand "-F" und dem bisher üblichen Freihang vom Zweifachen des Freistrahldurchmessers "D1" entspricht.

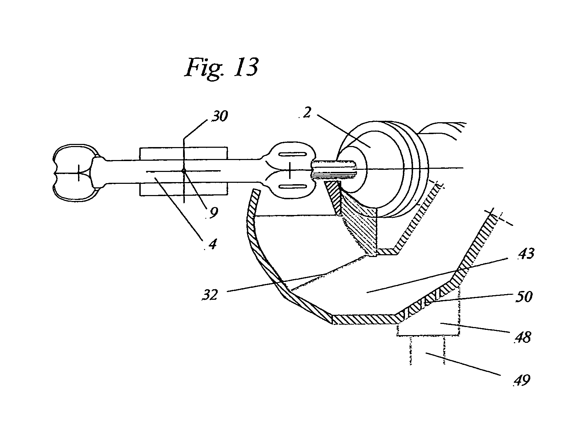

Das Laufrad (4) liegt nach einer Abschaltung in einem wassergefüllten Trog, der beim nächsten Start beispielsweise mit einer Strahlpumpe leer gepumpt werden muss. Es kann hilfreich sein, die Pumpe über den ganzen Startvorgang weiter laufen zu lassen und spezielle Ablaufleitungen vorzusehen, die rückstauende Strömungsteile im Ansaugbereich der Pumpe sammeln. Das heisst es muss ein leerer Sammelbehälter (48) unterhalb der Peltonturbine vorhanden sein, in welchen das Wasser abfliessen kann, wobei der Behälter auch der allgemeine Sumpf des Kraftwerkes sein kann. In Figur 13 ist ein Ausschnitt des Umlenkbogens gezeigt, der durch schräg einmündende Querschlitze (50) unterbrochen ist, wobei die Schlitze rückfliessendes Wasser über Ablaufleitungen (49) zum Sammelbehälter leiten. Gleichzeitig haben die Schlitze den Vorteil, dass im Normalbetrieb während der Umlenkung Luft durch sie eingezogen wird, welche die Reibung für den längeren Weg des Wassers auf der Unterseite des Laufrades verringert.

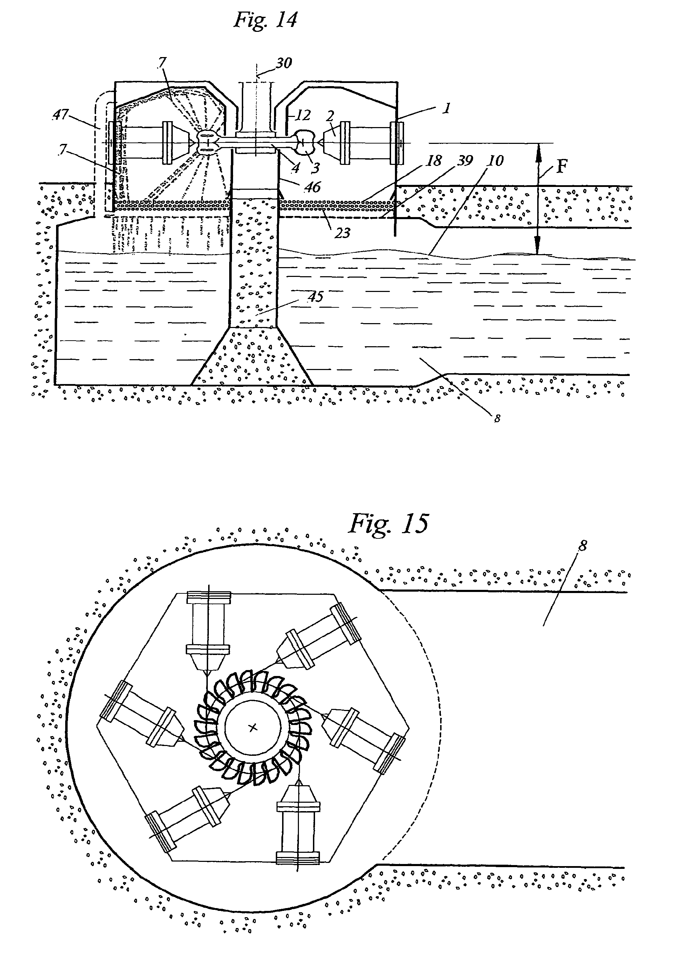

Im Beispiel von Figur 14 und 15 ist eine sechsdüsige Anlage mit vertikaler Laufradachse (30) im Vertikalschnitt und im Horizontalschnitt gezeigt,
wobei auf der linken Seite des Vertikalschnitts der Weg des Spritzwassers (7) angedeutet ist. Ein ringförmiges oder einer Düsenzahl "n" entsprechendes n-eckiges Gehäuse (1) stützt sich auf einer Betoneinfassung des Unterwasserkanals (8) ab. Die Düsen (2) ragen in herkömmlicher Bauart weit in das Gehäuse hinein. Ein innerer Gehäusering (12) setzt im oberen Teil an den Becherfüssen an und wird nach einen ersten Knick von 45° in einen konischen Ringteil weitergeführt, der in einen horizontalen Ringteil übergeht, an welchen mit einem weiteren Knick von 20° abwärts ein konischer Ringteil bis zur Aussenwand des Gehäuses (1) anschliesst. Mit dieser Anordnung wird der nach oben austretende Teil des Spritzwassers ebenfalls nach unten abgelenkt. Konzentrisch mit der Laufradachse (30) erhebt sich aus dem Unterwasserkanal (8) eine Säule (45) bis in das Gehäuse hinein und trägt ein längsgeteiltes Schutzrohr (46), welches unmittelbar bis an die Laufradnabe heranreicht und eine Führung für Spritzwasser bildet. Dieses kann auch als Belüftungsrohr dienen.

Unterhalb des Laufrades (4) sind in einem Abstand von etwa zwei Drittel des Freistrahldurchmessers "D1" zum Laufradmittelpunkt ein dreilagiges Bremsgitter (18) und darunter ein Lochblech (39) angebracht, welche sich über den ganzen Gehäusequerschnitt erstrecken. Dabei wird die Konstruktion von Bremsgitter (18) und Lochblech (39) in der Mitte durch die Säule 45 und aussen - wie das Gehäuse - durch die Betonumrandung des Unterwasserkanals abgestützt.

Das Bremsgitter bremst das Spitzwasser und nimmt seine kinetische Energie, die sonst zum Lufteintrag in das Unterwasser führt. Mit der Verlangsamung der Strömung und durch den Rückstau auf dem mit etwas weitern Abstand befindlichen Lochbleches wird ebenfalls noch Luft vom Spritzwasser abgetrennt. Ein Teil dieser Luft gelangt seitlich in Ausgleichsleitungen (47), welche den obersten Raum des Gehäuses zur Welle hin mit dem Unterwasserkanal verbinden. Der Freihang "F" beträgt etwa das 1,2-fache des Freistrahldurchmessers "D1".

Mit einer derartigen Gitterkonstruktion, die wie in Figur 6 aus einem Kreisring mit Gittersegmenten bestehen kann, wird auch eine Arbeitsplattform geschaffen, die vollen Zugang zum Laufrad (4) gewährt, wenn das längsgeteilte Schutzrohr (46) entfernt wird. Das Laufrad (4) kann von der Welle gelöst, auf der Säule (45) abgesetzt und seitlich durch eine Öffnung im Gehäuse ausgefahren werden, sowie in umgekehrter Reihenfolge montiert werden. Ebenso sind die Düsen (2) über diese Plattform zu Wartungszwecken erreichbar.

Die Balken oder Rohre im Bremsgitter (18) können auch in einer anderen Richtung als radial zur Laufradachse (30) verlaufen. In Figur 14 verlaufen die Rohre (25) Segmentweise tangential. Die relative Lage der Rohre zueinander entspricht der in Figur 7.

### Bezugszeichenliste

- 1: Gehäuse
- 1a: Gehäusewand
- 1b: Gehäusewand
- 2: Düse
- 2a: weitere Düse(n)
- 3: Doppelbecher
- 4: Laufrad
- 5: Symmetrie-Ebene
- 6: Freistrahl
- 7a: Spritzwasser
- 7b: Spritzwasser
- 7: Spritzwasser
- 8: Unterwasserkanal
- 9: Laufradmittelpunkt
- 10: Wasserspiegel
- 11: Äusserer Gehäusering
- 12: Innerer Gehäusering
- 13: dachförmiger Vorsprung
- 14: Durchbruch
- 15: Spitze
- 16: Ringraum
- 16b: Anschlussstück
- 17: Wurzel
- 18: Bremsgitter
- 19: Ebene
- 20: 1. Lage
- 21: weitere Lage
- 22: Balken
- 23: Rohr
- 24: Rohrdurchmesser
- 25: Mittenabstand
- 26: Zwischenraum
- 27: Lagenabstand
- 28: Durchtrittsfläche
- 29: Tangentenpunkt
- 30: Laufradachse
- 31: Radiale
- 32: Leitblech
- 33: Leitblech
- 34: Schneidkante
- 35: Sammelkanal, 35a oberer Sammelkanal, 35b unterer Sammelkanal
- 36: Verteilleitung
- 37: Labyrinthdichtung (berührungsfrei)
- 38: Turbinenlager
- 39: Lochblech
- 40: Öffnung
- 41: Klötzchen
- 42: Wendel
- 43: Umlenkbogen
- 44: Zulauf
- 45: Säule
- 46: Belüftungsrohr
- 47: Ausgleichsleitung
- 48: Sammelbehälter
- 49: Ablaufleitung
- 50: Querschlitz
- b: Becherbreite
- l: Becherlänge
- D1: Freistrahldurchmesser
- F: Installationshöhe (Freihang)
- P, P1, P2: Punkt
- S1: Abstand
- S2: Abstand
- S3: Abstand
- α, β, γ: Winkel
- λ, ϕ: Winkel

## Patentansprüche

1. Peltonturbine mit einem Wasserabfuhrsystem für Leistungen von mehr als 100 kW, wobei innerhalb eines Gehäuses (1) ein Laufrad (4 ) mit Doppelbechern (3 ) einer Breite "b" und einer Becherlänge "l" bestückt ist, in welche Düsen (2), die in einer Symmetrieebene (5 ) der umlaufenden Becher angeordnet sind, tangential auf einem Freistrahldurchmesser "D1" jeweils an einem Tangentenpunkt (29) einen Freistrahl (6) einspritzen und wobei aus den Bechern austretendes Spritzwasser (7 ) eingeschlossen durch Gehäusewände (1a, 1b) in einen Unterwasserkanal (8) fällt,
**dadurch gekennzeichnet,**
**dass** innerhalb des Gehäuses (1) an den Bechern (3) ansetzend über den vollständigen Umfang des Laufrades (4) als Führungsmittel, das Spritzwasser führt und umlenkt, ein innerer Gehäusering (42) vorgesehen ist, der bis an die Wurzeln (17) der Becher (3) herangeführt ist, und
**dass** jeder Freistrahl (6) in Richtung des Tangentenpunkts (29) durch einen Durchbruch (14) in einem ebenfalls das Spritzwasser führenden und umlenkenden, dachförmigen äußeren Führungsmittel (13) geführt ist,
wobei die Spitze des dachförmigen Führungsmittels in der Symmetrieebene (5) der Führungsmittel (12, 13) gelegen ist und einen Abstand "S1" von 5% bis 20% der Becherlänge "l" zu den Bechern aufweist und die Dachflächen zur Symmetrieebene (5) einen Winkel α zwischen 55° und 80° bilden.

2. Peltonturbine nach Anspruch 1,
**dadurch gekennzeichnet,**
**dass** die inneren und äußeren Führungsmittel (12, 13) einen sich axial erstreckenden Ringraum (16) zur Führung des aus den Bechern austretenden Spritzwassers bilden.

3. Peltonturbine nach Anspruch 1 oder 2,
**dadurch gekennzeichnet,**
**dass** jeder Durchbruch (14) den zugehörigen Freistrahl (6) einer Düse (2) gegen Spritzwasser abdeckt, wobei die Düse selbst nicht über das dachförmige Führungsmittel (13) nach innen hineinragt.

4. Peltonturbine nach Anspruch 1 oder 3,
**dadurch gekennzeichnet,**
**dass** eine Düse (2) den Durchbruch (14) gegen Außen abschließt, um das Einziehen von Luft zu durch den Freistrahl (6) zu verhindern.

5. Peltonturbine nach Anspruch 1, 3 oder 4,
**dadurch gekennzeichnet,**
**dass** ein Durchbruch (14) nur einen geringfügig größeren Durchmesser als der Freistrahl (6 ) aufweist, damit der dachförmige Vorsprung (13) nur geringe Unterbrüche gegenüber umlaufenden Spritzwasser (7) aufweist.

6. Peltonturbine nach einem der Ansprüche 1 bis 5,
**dadurch gekennzeichnet,**
**dass** der innere Gehäusering (12) bei den Becherwurzeln (17) einen Winkel β mit der Symmetrieebene (5) zwischen 55° und 80° bildet.

7. Peltonturbine nach einem der Ansprüche 1 bis 6,
**dadurch gekennzeichnet,**
**dass** Winkel α oder Winkel β zwischen 65° und 75° liegen.

8. Peltonturbine nach einem der Ansprüche 1 bis 7,
**dadurch gekennzeichnet,**
**dass** der Querschnitt zum Unterwasserkanal (8 ) durch ein Lochblech (39 ) abgedeckt ist.
